# EUROPÄISCHE PATENTSCHRIFT

(11) **EP 0 461 143 B1**
(45) Veröffentlichungstag und Bekanntmachung des Hinweises auf die Patenterteilung: **19.01.1994**
(21) Anmeldenummer: 90903809.3
(22) Anmeldetag: 26.02.1990
(51) Int. Cl.: B29C 45/76, B29C 45/77

(54) **VERFAHREN ZUM STEUERN DER NACHDRUCKPHASE BEIM SPRITZGIESSEN THERMOPLASTISCHER KUNSTSTOFFE**
PROCESS FOR CONTROLLING THE DWELL PRESSURE PHASE DURING INJECTION MOULDING OF THERMOPLASTICS
PROCEDE POUR REGULER LA PHASE DE MAINTIEN EN PRESSION LORS DE L'INJECTION DE THERMOPLASTIQUES

(30) Priorität: 01.03.1989 DE 3906451; 24.08.1989 DE 3927995
(43) Veröffentlichungstag der Anmeldung: 18.12.1991
(73) Patentinhaber: Lauterbach, Martin, Dr., W-5100 Aachen (DE)
(72) Erfinder: LAUTERBACH, Martin, D-5100 Aachen (DE); BREUER, Peter, D-5100 Aachen (DE); DAHMEN, Jörg, D-5882 Meinerzhagen (DE); BOUKES, Gerald, D-5100 Aachen (DE)
(74) Vertreter: von Kreisler, Alek, Dipl.-Chem.
(86) Internationale Anmeldenummer: EP9000318
(87) Internationale Veröffentlichungsnummer: WO9009879

(56) Entgegenhaltungen:
- US-A- 4 816 197

## Beschreibung

Die Erfindung betrifft ein Verfahren zum Steuern eines Spritzgießprozesses zur Herstellung von Formteilen aus thermoplastischen Kunststoffen, der mit einer isochoren Abkühlphase abschließt, wobei zwischen der isochoren Abkühlphase und der Verdichtungspase eine im wesentlichen isobare Nachdruckphase bis zum Erreichen einer Isochoren vorgesehen wird.

Beim Spritzgießen von Formmassen wird üblicherweise an der dafür eingesetzten Maschine eine große Anzahl von meßtechnisch erfaßbaren Parametern eingestellt, deren Werte einen Einfluß auf die Eigenschaften des gefertigten Formteils haben.

Ein wesentliches Problem bei der Einrichtung von Thermoplast-Kunststoff-Spritzgießmaschinen ist die Ermittlung eines geeigneten Verlaufs für die Nachdruckführung. Ziel ist hierbei meistens die Erzeugung einer möglichst geringen und genau definierten Schwindung im Formteil. Wird durch äußere Störungen die Temperaturführung in der Maschine beeinflußt, so sollte der Druckverlauf angepaßt werden, um die erwünschte konstante Formteilqualität zu erreichen.

Bei einer Spritzgießmaschine wird nach der Füllung der Form mit Formmasse üblicherweise in der darauf folgenden sogenannten Nachdruckphase ein Druck auf die Formmasse aufgebracht, um die Schwindung infolge Abkühlung auszugleichen.

Üblicherweise wird ein hierfür geeigneter Druckverlauf von Maschineneinrichtern ermittelt, indem der Druck so hoch eingestellt wird, daß am Formteil keine Einfallstellen mehr sichtbar sind. Die vorgegebene Zeit, über welcher der Druck aufgebracht wird, richtet sich nach der Zeit, welche das Formteil zum Erstarren benötigt.

Es ist bekannt, daß der Verlauf des Nachdruckes beim Spritzgießen einen Einfluß auf das Formteilgewicht und andere Formteileigenschaften hat.

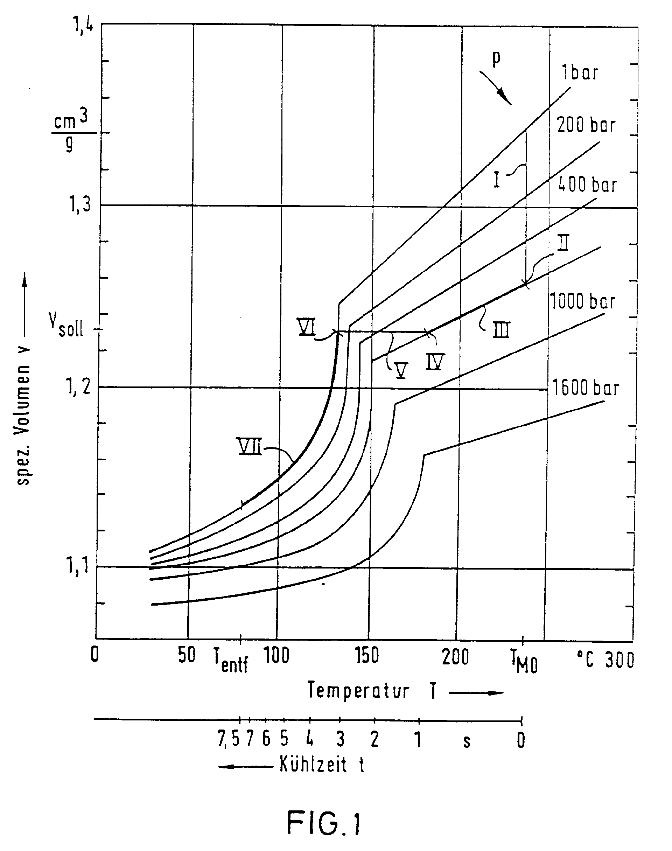

Ein bekanntes Verfahren (DE-A-32 04 756) ermöglicht die Ermittlung eines an das Formmassenverhalten optimal angepaßten Druckverlaufes, indem aus einem materialspezifischen Kenndatensatz, welcher für das verwendete Material den Zusammenhang zwischen Druck p, spezifischem Volumen v und Temperatur T beschreibt (Fig. 1), genau derjenige Druckverlauf bestimmt wird, welcher nach der Formfüllung über den Abkühltemperaturverlauf ein konstant bleibendes spezifisches Volumen erzeugt (Abschnitt V in Fig. 1).

Eine andere Variante des Verfahrens (DE-A-36 08 973, "Kunststoffberater", Band 33, Nr. 11, Nov.1988, S.30-34) sieht zwischen der Füll- und Verdichtungsphase und der isochoren Abkühlphase eine im wesentlichen isobare Nachdruckphase bis zum Erreichen einer Isochoren vor. Der isochore Zustandsverlauf wird dabei durch das Betätigen einer Verschlußdüse eingeleitet. Der Zeitpunkt der Betätigung wird hierbei ähnlich dem vorher beschriebenen Verfahren aus dem PVT-Verhalten des Materials im Werkzeug ermittelt, indem bei Erreichen einer der aus dem PVT-Diagramm ermittelten Druck-Temperaturkombination auf die isochore Phase umgeschaltet wird, bei der ein bestimmtes konstantes spezifisches Volumen der erstarrenden Formmasse eingehalten werden kann. Das bekannte Verfahren ermöglicht es, nur eine einzige vorbestimmte Isochore reproduzierbar anzufahren. Dagegen ist es nicht möglich, die Reproduzierbarkeit eines bestimmten Formteilparameters zu verbessern. Soll beispielsweise ein anderes Formteilgewicht eingestellt werden, müssen die Prozeßparameter verändert werden und erneut isochore Druckabsenkungskurven ermittelt werden, um neue Temperatur- und Druckwertepaare für eine andere Isochore zu erhalten. Alternativ können Daten aus dem PVT-Diagramm entnommen werden, was allerdings voraussetzt, daß ein solches vorhanden ist und auch für die vorliegende Materialkombination gültig ist. Letztlich ist es also bei dem bekannten Verfahren erforderlich, materialspezifische Druckabsenkungskurven zu ermitteln oder ein für die Materialkombination gültiges PVT-Diagramm zu besitzen und schränkt dadurch die Anwendung des Verfahrens auf solche Materialkombinationen ein.

Aus der Entgegenhaltung "Kunststoffe", Band 73, Nr. 5, Mai 1983, Seiten 241 bis 245, wird ein Verfahren zum Steuern eines Spritzgießprozesses vorgeschlagen, bei dem der Formnesthohlraum versiegelt wird. Eine Versiegelung des Formnesthohlraums kann sich aber, wie zugestanden wird, mit ausreichender Genauigkeit nicht im richtigen Zeitpunkt verwirklichen lassen.

Es wird eine Nachdrucksteuerung in der isochoren Abkühlphase durchgeführt. Darüber hinaus benötigt das Verfahren gemäß dieser Entgegenhaltung das PVT-Diagramm zur Berechnung der isochoren Druckabsenkung und ist daher nicht von materialspezifischen Kenndaten unabhängig. Soweit Zeiten für den isobaren Nachdruck ermittelt werden, sind diese stets in Verbindung mit dem PVT-Diagramm rechnerisch bestimmt worden.

Die Druckschrift "Kunststoffe", Band 78, August 1988, Seiten 732 bis 735 beschreibt die Verwendung von Kennfeldern als Brücke zwischen Prozeß- und Maschinenparametern. Diese Kennfelder werden allerdings in Verbindung gebracht mit der herkömmlichen Steuerung unter Zuhilfenahme des PVT-Diagramms, mit dessen Hilfe die Prozeßparameter bestimmt werden.

Ausgehend von dem aus der Druckschrift "Kunststoffberater" bekannten Stand der Technik liegt der Erfindung die Aufgabe zugrunde, ein Verfahren zur Steuerung der Nachdruckphase zu schaffen, das von vorgegebenen oder vorab zu ermittelnden materialspezifischen Kenndaten unabhängig ist und eine bessere Reproduzierbarkeit der Formteilgenauigkeit ermöglicht.

Zur Lösung dieser Aufgabe dient erfindungsgemäß ein Verfahren zum Steuern eines Spritzgießprozesses zur Herstellung von Formteilen aus thermoplastischen Kunststoffen, der mit einer isochoren Abkühlphase abschließt, wobei zwischen der isochoren Abkühlphase und der Verdichtungsphase eine im wesentlichen isobare Nachdruckphase bis zum Erreichen einer Isochoren vorgesehen wird, das dadurch gekennzeichnet ist, daß die Nachdruckdauer in Abhängigkeit von in mindestens einem Lernzyklus ermittelten Kenndatenfeldern gesteuert wird, die die Abhängigkeit eines oder mehrerer gemessener Formteil-Sollparameter von mehreren Prozeßparametern enthalten.

Eine weitere Lösung besteht erfindungsgemäß darin, daß der Nachdruck in Abhängigkeit von in mindestens einem Lernzyklus ermittelten Kenndatenfeldern gesteuert wird, die die Abhängigkeit eines oder mehrerer gemessener Formteil-Sollparameter von mehreren Prozeßparametern enthalten.

Bei einer weiteren Lösung ist erfindungsgemäß vorgesehen, daß die Nachdruckdauer und der Nachdruck in Abhängigkeit von in mindestens einem Lernzyklus ermittelten Kenndatenfeldern gesteuert wird, die die Abhängigkeit eines oder mehrerer gemessener Formteil-Sollparameter von mehreren Prozeßparametern enthalten.

Ein wesentlicher Vorteil der Erfindung besteht darin, daß keine materialspezifischen Kenndaten aus PVT-Diagrammen oder aus materialspezifischen Vorversuchen benötigt werden, um das erfindungsgemäße Verfahren durchzuführen. Abweichungen der Prozeßparameter werden automatisch mit Hilfe der Kenndatenfelder ausgeglichen, indem entweder die Nachdruckdauer t_{NiSo}, der Nachdruck p_{N} oder beide zusammen gesteuert werden.

Die Nachdruckdauer wird in Abhängigkeit von in mindestens einem Lernzyklus ermittelten Kenndatenfeldern gesteuert, die die Abhängigkeit eines oder mehrerer gemessener Formteil-Sollparameter von mehreren Prozeßparametern für die dem Lernzyklus zugrundeliegende Werkzeug-Maschine-Material-Kombination enthalten.

Alternativ kann anstelle der Nachdruckdauer auch der Nachdruck oder die Nachdruckdauer in Kombination mit dem Nachdruck gesteuert werden.

Die Auswirkungen einzelner bestimmter Randbedingungen auf eine am Formteil meßbare Größe, wie z.B. das Formteilgewicht m oder eine bestimmte Abmessung, werden in einem ersten Schritt erfaßt. Hierdurch wird es möglich, die für die Prozeßführung benötigten Kenndaten, nämlich die Abhängigkeit eines oder mehrerer Formteilparameter von den Prozeßparametern durch die Maschine automatisch ermitteln zu lassen.

Das mehrdimensionale Kenndatenfeld enthält dann mit Hilfe mathematischer Methoden optimierte Abhängigkeiten bestimmter vorgegebener Formteilparameter von einzelnen Prozeßparametern. In der Produktionsphase ist es daher möglich, die prozeßbedingte Änderung von Prozeßparametern auch bei geringfügigen Abweichungen auszugleichen und dadurch die Reproduzierbarkeit des jeweiligen Formteilparameters zu erhöhen.

Vorzugsweise ist vorgesehen, daß die Nachdruckphase isobar gesteuert wird.

Dadurch, daß zwischen der Verdichtungsphase und der isochoren Abkühlphase eine isobare Nachdruckphase vorgesehen ist, verläuft der Spritzgießprozeß in dieser Nachdruckphase kontrolliert, indem der Werkzeuginnendruck oder der von außen auf das Werkzeug aufgebrachte Druck während der Formmasse-Nachlieferung konstant gehalten wird. Auf diese Weise verläuft kein Prozeßabschnitt unkontrolliert, so daß letztlich auch damit die Reproduzierbarkeit der Formteilgenauigkeit verbessert wird.

In dem Lernzyklus werden einzelne Prozeßparameter jeweils mindestens zweifach variiert und zusammen mit den anschließend gemessenen Formteil-Sollparametern und anderen Prozeßparametern abgespeichert, wobei mit einem Rechner die Abhängigkeit der Formteilsollparameter von den Prozeßparametern bestimmt wird und als Kenndatenfeld gespeichert wird.

Bei einer Weiterbildung der Erfindung ist vorgesehen, daß in den sich dem Lernzyklus anschließenden Produktionszyklen die Formteil-Sollparameter und die Prozeßparameter kontinuierlich oder in regelmäßigen oder unregelmäßigen Abständen erfaßt werden und daß die in dem Lernzyklus erstellten Kenndatenfelder aktualisiert werden.

Das in der Lernphase erstellte Kenndatenfeld kann auf diese Weise ständig überprüft und nachgebessert werden, so daß das Kenndatenfeld mit Hilfe statistischer Korrekturrechnungen zusätzlich optimiert werden kann.

Im folgenden wird unter Bezugnahme auf die Zeichnungen die Erfindung näher erläutert:

Es zeigen:
- Fig. 1: durch die Größen Druck p, Temperatur T und spezifisches Volumen der Formmasse v definierte Spritzgießzyklen,
- Fig. 2: durch die Größen Druck p, Temperatur T und Gewicht m des Formteils definierte Spritzgießzyklen,
- Fig. 3: den Aufbau einer für die Durchführung des Verfahrens benötigten Spritzgießmaschine,
- Fig. 4: ein Ausführungsbeispiel des Verfahrens, bei welchem das Formteilgewicht m durch Anpassung der isobaren Nachdruckzeit an die anderen gemessenen Parameter auf einem vorbestimmten Wert konstant gehalten wird, und
- Fig. 5a, 5b, 5c: Kenndatenfelder.

Im pvT-Diagramm (Fig. 1), welches die für ein Material typische Abhängigkeit des spezifischen Volumens von der Temperatur und dem Druck beschreibt, läßt sich der Prozeßverlauf in der Nachdruckphase sehr gut darstellen. Nach dem Einspritzen des Materials in die Form bei möglichst konstanter Temperatur (Abschnitt I) erfolgt ein Umschalten auf Drucksteuerung bzw. -regelung (Punkt II). Es folgt eine Phase konstanten Druckes p_{N} der Dauer t_{NiSo} (Abschnitt III). Diese Phase isobarer Druckführung wird am Punkt IV in eine Phase konstanten spezifischen Volumens, der isochoren Phase (Abschnitt V) überführt.

Auf diese isochore Prozeßführung wird besonderer Wert gelegt, denn im zunächst vereinfachend angenommenen Fall vernachlässigbarer Werkzeugatmung ist dies gleichbedeutend mit einer minimierten Materialbewegung im Werkzeug. Dieser Verlauf wird im allgemeinen zur Reduzierung von Orientierungen, Spannungen und Verzug angestrebt.

Wesentlich für konstante Abmaße des Formteils und auch für ein konstantes Gewicht ist das Erreichen der 1-bar-Linie bei einem über alle Zyklen konstanten spezifischen Volumen (Punkt VI in Fig. 1), denn genau bei diesem Druck löst sich das Teil von den Werkzeugwänden ab und beginnt anschließend zu schwinden. Das Ausmaß der volumetrischen Schwindung ist genau beschrieben durch die Anderung des spezifischen Volumens beim Verlauf auf der 1-bar-Linie (Abschnitt VII in Fig. 1).

Das Formteilgewicht m, welches am fertigen Formteil gemessen wird, entspricht dem Gewicht des Teiles vor der Beendigung der Materialzufuhr, da ja kein Materialfluß in die Form oder aus der Form möglich ist. Die Adaption eines oder mehrerer Prozeßparameter soll die Auswirkungen der Schwankung anderer Parameter in der Weise ausgleichen, daß eine für die Produktion angestrebte meßtechnisch erfaßbare Zielgröße, wie z.B. ein konstantes Gewicht, konstant gehalten wird. Für den Fall der Adaption der isobaren Nachdruckzeit t_{NiSo} bedeutet das, daß die isobare Phase z.B. durch die Beendigung der Materialzufuhr in Abhängigkeit von der Temperatur und dem Druck bei jedem Zyklus bei Erreichen des gleichen Formteilgewichtes oder des Zustandes, der bei jedem Zyklus zu den gleichen Formteileigenschaften führt, beendet wird.

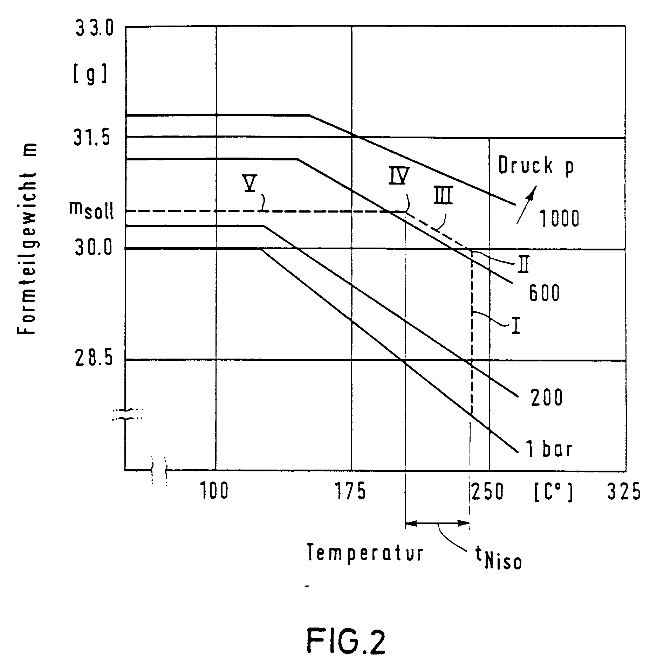

Fig. 2 zeigt das pmT-Diagramm, das die Abhängigkeit eines speziellen Formteilparameters, nämlich des Formteilgewichtes, von der Temperatur und dem Druck darstellt. Die in dem pvT-Diagramm der Fig. 1 besprochenen Prozeßphasen sind in Fig. 2 entsprechend gekennzeichnet.

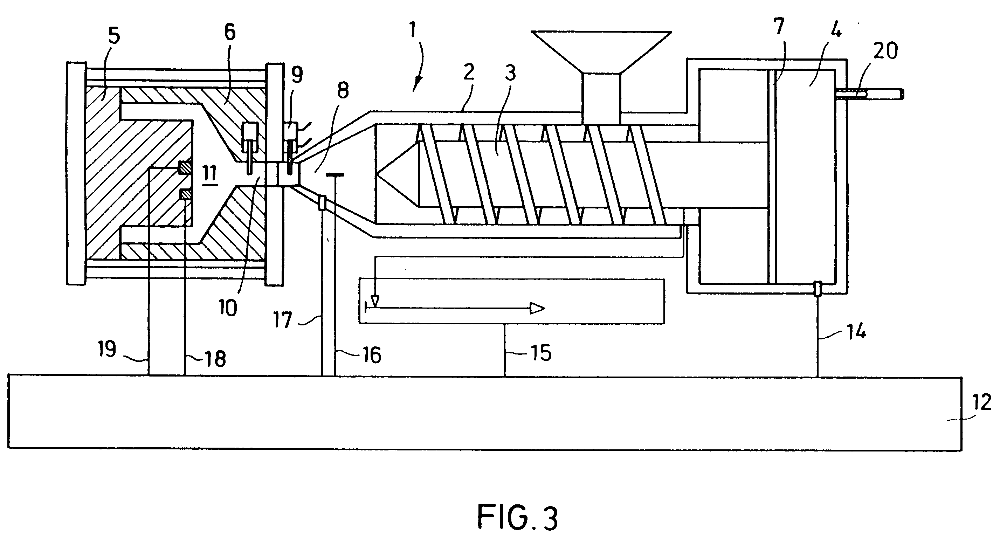

Fig. 3 zeigt eine Spritzgießmaschine 1 zur Durchführung des Spritzgießprozesses. Die Spritzgießmaschine weist eine in einem Schneckenzylinder 2 befindliche Einspritzschnecke 3 auf, die durch Druckbeaufschlagung des Hydraulikzylinders 4 in Richtung auf das aus zwei Formhälften 5,6 bestehende Formwerkzeug geschoben wird, indem der Druck auf den Hydraulikkolben 7 wirkt. Die im Stauraum 8 vor der Einspritzschnecke 3 befindliche Formmasse wird durch einen mit einem Verschluß 9 absperrbaren Düsenkanal 10 in den Hohlraum 11 des Formwerkzeugs eingespritzt. Eine Auswerteeinheit 12 überwacht dabei mehrere Prozeßparameter und erhält beispielsweise ein Drucksignal 14 aus dem Hydraulikzylinder 4, ein Wegmeßsignal 15 von der Einspritzschnecke 3, ein Formmassetemperatursignal 16 aus dem Stauraum 8 vor der Schneckenspitze, ein Druckmeßsignal 17 aus dem Stauraum 8, sowie ein Temperatur- und ein Druckmeßsignal 18 bzw. 19, die auf der Oberfläche der Formhälfte 5 erfaßt werden.

Beim Einsatz des Verfahrens wird die in Fig. 3 gezeigte Spritzgießmaschine 1 zunächst in einer Lernphase veranlaßt, Teile mit vorgegebenen, aus Erfahrungswerten näherungsweise bestimmten Prozeßparametern zu produzieren. Dabei wird das Gewicht m oder eine andere in der Produktionsphase angestrebte Formteileigenschaft der produzierten Formteile bei der Einstellung bestimmter Parameter wie Temperaturen, Druck oder Zeit konstanten Druckes an der Maschine gemessen und in Kombination mit den Parametern in der Auswerteeinheit 12 abgespeichert, welche später auch zur Adaption der Steuergrößen dient.

Für den Fall der Optimierung der Nachdruckführung bedeutet das, daß im von der Spritzgießmaschine 1 zu realisierenden Prozeßablauf nach einer Phase konstanten Druckes mit der Dauer t_{Niso} die isochore Phase eingeleitet wird.

Alle für die Prozeßführung gemessenen oder beeinflußten Daten sollten in der Lernphase mindestens zweifach variiert werden.

Die Zeit konstanten Druckes wird vorgegeben bzw. gemessen. Es müssen dabei mindestens zwei verschiedene Zeiten mit jeweils mindestens zwei verschiedenen Drücken realisiert werden. Diese Parameterkombinationen werden noch bei mindestens zwei verschiedenen Werkzeugwandtemperaturen und mindestens zwei verschiedenen Massetemperaturen eingestellt.

Zu jedem Spritzgießzyklus wird der Formteilsollparameter, z.B. das Gewicht m des mit diesen Parametern produzierten Teiles gemessen. Es ist auch sinnvoll, diese Meßwerte über mehrere Zyklen mit gleicher Einstellung zu mitteln.

Nach dieser Lernphase ist die Maschine in der Lage, Kennfelder abzuspeichern, deren Kenndaten z.B. durch Interpolation zwischen den in der Lernphase eingestellten Parametern und den dabei resultierenden Formteilgewichten den Zusammenhang zwischen dem Gewicht des Formteils und den Parametern bei dem vorgeschriebenen Prozeßverlauf - isobare Phase bestimmter Dauer mit anschließender Unterbrechung der Formmassezufuhr - beschreiben.

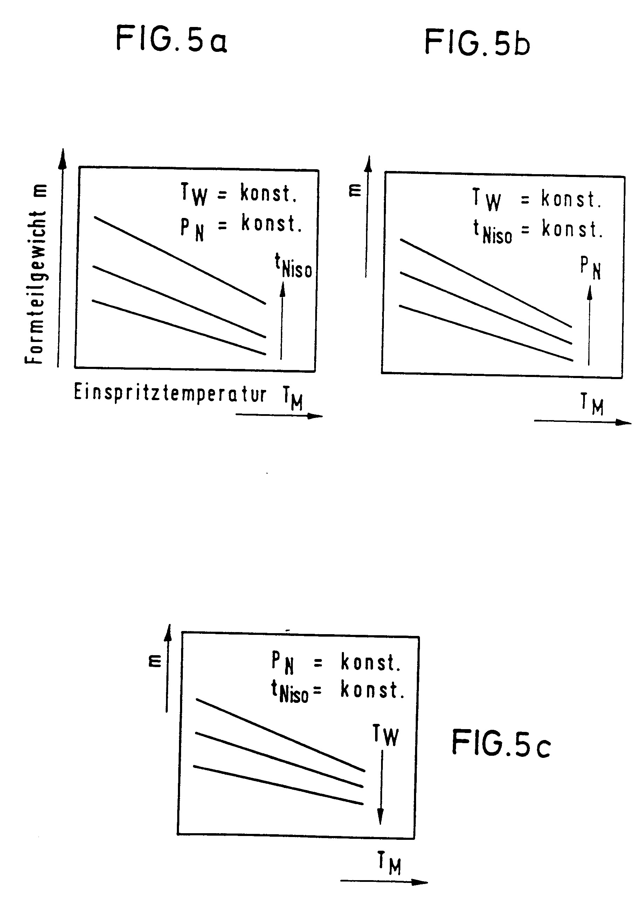

Beispiele für dreidimensionale Kennfelder zeigen die fünf Figuren 5a bis 5c.

Ein Kennfeld (Fig. 5a) zur Steuerung der isobaren Nachdruckzeit t_{NiSo} beschreibt die Zeit, für die eine bestimmte gemessene oder der Maschine vorgegebene Nachdruckhöhe p_{N} aufrechterhalten werden soll, bis die Formmassezufuhr in Abhängigkeit der Parameter Werkzeugtemperatur T_{W} oder Formmassetemperatur T_{M} und der Nachdruckhöhe p_{N} gesperrt wird.

Ein anderes Kennfeld zur Steuerung des aufzubringenden Nachdruckes p_{N} beschreibt, wie aus Fig. 5b ersichtlich, den für eine bestimmte Zeit t_{Niso} konstant zu haltenden Nachdruck p_{N} in Abhängigkeit der Parameter Temperatur T_{W} oder T_{M}.

Die Kennfelder werden aus den in der Lernphase gemessenen Daten ermittelt, indem beispielsweise für ein Formteilgewicht mₛₒₗₗ, welches für die Formteilproduktion angestrebt wird, ein Parameter in der Weise angepaßt wird, daß der Einfluß anderer Parameterschwankungen ausgeglichen wird. Formteilgewichte, welche sich bei Einstellung von Parametern zwischen den in der Lernphase eingestellten Werten ergeben, werden z.B. durch Interpolation oder durch Regressionskurven durch die Meßpunkte ermittelt.

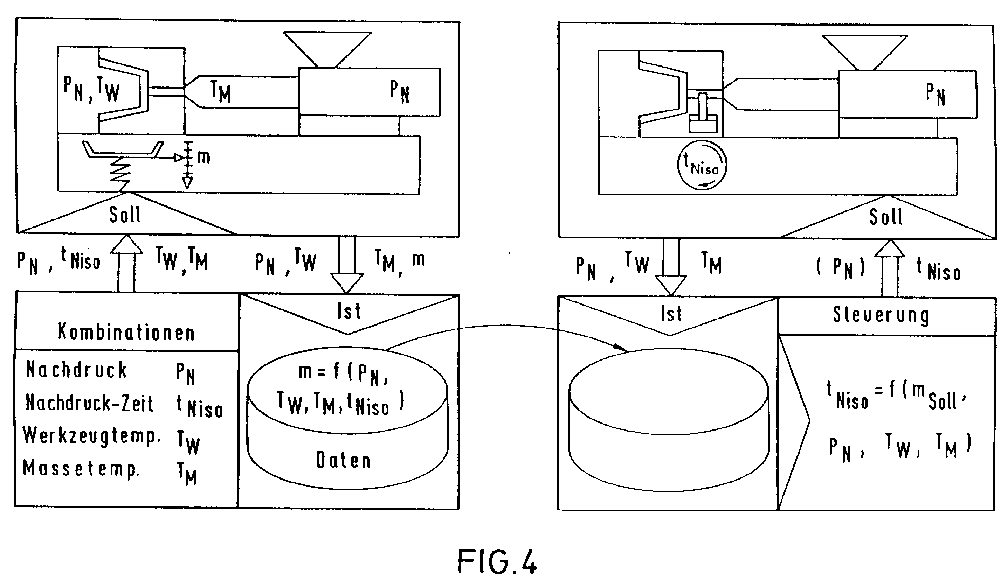

Dies ist für den Fall der Steuerung der isobaren Nachdruckzeit das Auflösen nach t_{NiSo}. Dieses Ausführungsbeispiel zeigt Fig. 4.

Fig. 5c zeigt ein weiteres dreidimensionales Kennfeld, das die Abhängigkeit des Formteilgewichtes von der Einspritztemperatur und der Werkzeugtemperatur bei konstantem Nachdruck p_{N} und konstanter Nachdruckdauer t_{Niso} darstellt.

Mathematisch ist es möglich, diese Kennfelder in ein einziges mehrdimensionales Kennfeld zusammenzuführen, auf das während der Produktionsphase zur Steuerung des Spritzgießprozesses zurückgegriffen wird.

Der Druck, welcher für die Kennfeldaufnahme und für die Optimierung ausgewertet wird, kann am Hydraulikzylinder 4 des Schneckenvortriebs oder im Schneckenvorraum 8 oder in der Form 5,6 gemessen werden.

Wichtig ist dabei natürlich, daß zur Prozeßführung in den Produktionszyklen der gleiche Druck eingestellt wird wie bei der Kennfeldaufnahme.

Es ist sinnvoll, die Meßwerte über mehrere Spritzgieß- zyklen zu mitteln oder auch in der Produktionsphase Meßwerte aufzunehmen und mit diesen die Meß- und Steuerkennfelder statistisch besser abzusichern.

Diese Kennfelder sind dann nicht mehr nur auf das Material bezogen, sondern auch auf das eingesetzte Werkzeug. Das bedeutet, daß ein neues Kennfeld benutzt werden muß, sobald ein anderes Werkzeug oder Material eingesetzt wird. Es kann dann entweder aus einem Datenträger, in dem zuvor erzeugte Kennfelder abgespeichert sind, ausgelesen oder durch Aktivieren der Lernphase ermittelt werden.

In der Produktionsphase wird der Spritzgießmaschine dann der Wert für die Nachdruckhöhe und für die Zeit, für welche dieser Druck eingehalten werden soll, aus den Kennfeldern zugeführt.

Es ist möglich, durch eine Adaption der "isobaren Nachdruckzeit" Prozeßschwankungen der Temperatur und des Druckes auszugleichen.

Besonders interessant ist die Adaption an den aktuell gemessenen Druck, da hierdurch die Anforderungen an die Druckregelung verringert werden können, denn Druckschwankungen werden durch die Vorgabe der richtigen Zeit kompensiert.

Dies gilt insbesondere für den Werkzeuginnendruck, welcher sich auf Grund des trägen Streckenübertragungsverhaltens von der Hydraulik bis in die Kavität nur sehr schwer regeln läßt.

Auch wenn der Werkzeuginnendruck nicht geregelt ist, läßt sich der Einfluß von Temperatur- und Druckschwankungen mit Hilfe des pmT-Verfahrens (Druck-Formteilgewicht-Temperatur-Verfahren) kompensieren.

Ein anderer wesentlicher Vorteil ist die Möglichkeit, die Spritzgießmaschine immer genau an der Schließkraft- bzw. Einspritzdruck-Leistungsgrenze zu betreiben und hiermit eine der Maschinenleistung entsprechende minimale Schwindung bei konstanter Qualität zu erzielen.

Gerade beim Anfahren sind oft die Druck- und Temperaturwerte im Werkzeug noch gar nicht konstant, so daß hier eine Kompensation zu einem wesentlich verbesserten Prozeßverhalten führt.

Die bei der Erstbemusterung eines Werkzeuges einzuplanende Anzahl von mindestens n + 1 Parameterkombinationen bei n Prozeßparametern (bei welchen nicht unbedingt Ausschuß produziert wird) kann durch das wesentlich verbesserte Anfahrverhalten schnell kompensiert werden.

Der oder die Drücke, welche für die Kennfeldaufnahme und für die Optimierung und auch für die Schneckenlageregelung mit dem Ziel, ein Druckgleichgewicht zwischen zwei Meßorten zu erreichen, ausgewertet werden, können am Hydraulikzylinder 4, der die Einspritzschnecke 3 vorantreibt, oder in dessen Zuführleitung 20 oder in der Schmelze im Stauraum 8 vor der Einspritzschnecke 3 oder an der Formteilhälfte 5 gemessen werden. Eine andere Möglichkeit besteht darin, statt eines Druckes eine dem Druck proportionale Kraft oder Verformung z.B. in einem Maschinenelement zu messen, welches die Schneckenvorschubbewegung auslöst oder eine Gegenkraft ausübt. Dies kann z.B. die die Schnecke umschließende Zylinderwand 2 sein.

Die der Auswertung zugeführten Temperaturen können an verschiedenen Orten gemessen werden. Hierfür eignen sich die Messung in der Schmelze, die Messung an der Zylinderwand 2, die Messung im Formteil oder eine Messung der Temperatur der Form. Vorteile bietet hier die Messung in der Nähe oder an der Formoberfläche, da hier Temperaturänderungen schneller erfaßt werden. Allgemein gesagt eignen sich alle mit der Formmasseschmelze in Kontakt stehenden Maschinenelemente.

Die Formmassetemperatur kann auch an einer oder mehreren Stellen vor dem Eintritt in den Formhohlraum gemessen werden.

Als Formteilmerkmal, dessen Abhängigkeit von den Prozeßparametern in oder nach der Lernphase gemessen und registriert wird und dessen Größe in der Produktion angestrebt wird, können im Prinzip beliebige meßbare Größen genommen werden. Als Beispiele sind das Gewicht des Formteils, ein oder mehrere Maße, Winkel, physikalische Eigenschaften wie Leitfähigkeit, optische Eigenschaften wie Brechungsindex, Oberflächeneigenschaften oder eine mathematische Größe, welche verschiedene Eigenschaften mit einer Gewichtung versehen, zu einer Zahl verrechnet. So kann es beispielsweise für die Herstellung von Kunststoffstoßstangen für Kraftfahrzeuge wesentlicher sein, ein bestimmtes Maß z.B. den Abstand der Befestigungslöcher reproduzierbar genau einzuhalten als das Gewicht der Stoßstange. Dabei ist ein optimiertes Kenndatenfeld für Maße abweichend von einem optimierten Kenndatenfeld für ein Formteilgewicht.

Die isochore Prozeßführung kann auf verschiedene Weisen erzeugt werden, z.B. durch einen Verschluß 9 im Einspritzkanal oder in dem Formteil 5 oder durch eine Regelung der Schneckenbewegung, so daß die auf die Änderung der Lage der Einspritzschnecke 3 bezogene Druckänderung auf einem bestimmten in einer weiteren Lernphase ermittelten Wert gehalten wird. In dieser von der Lernphase zur Ermittlung des Kenndatenfeldes zu unterscheidenden Lernphase wird die Druckänderung bei einer Schneckenbewegung bei geschlossenem Verschluß 9 gemessen.

Die Einspritzschnecke 3 wird beispielsweise in Abhängigkeit eines z.B. in der Form gemessenen Druckes so zurückbewegt, daß die elastische Verformung des gesamten unter Druck stehenden Einspritzaggregates sich nicht durch einen Massefluß in die Form entlastet, sondern in Richtung der Einspritzschnecke. Die hierfür benötigte Lageänderung der Schnecke oder eines entsprechenden Kolbens kann wieder aus einem Kenndatenfeld entnommen werden, welches durch eine Messung der Elastizität des mit Formmasse gefüllten Einspritzaggregates erfolgen kann, indem die mit einer Schnecken- oder Kolbenlageänderung verbundene Druckänderung in einer Lernphase bei einem dicht verschlossenen Einspritzaggregat gemessen und registriert wird.

Die Fließrichtung und die Fließgeschwindigkeit der Schmelze in die Form oder in der Form kann durch Messung der Bewegung oder der Kraft, welche auf ein in den Schmelzefluß hineinragendes oder mit der Schmelze in Kontakt stehendes Maschinenelement einwirkt, gemessen werden.

Eine andere Möglichkeit zur Erzielung der isochoren Prozeßführung besteht darin, durch eine Bewegung der Schnecke die Druckdifferenz zwischen zwei in Fließrichtung der Formmasse hintereinander angeordneten Orten, zum Beispiel in der Form oder in der Form und an einer anderen Stelle zu Null zu regeln.

Das Verfahren läßt sich insbesondere für thermoplastische Formmassen einsetzen, deren Verarbeitungstemperatur größer ist als die Temperatur der Form.

## Patentansprüche

1. Verfahren zum Steuern eines Spritzgießprozesses zur Herstellung von Formteilen aus thermoplastischen Kunststoffen, der mit einer isochoren Abkühlphase (V) abschließt, wobei zwischen der isochoren Abkühlphase (V) und der Verdichtungsphase (I) eine im wesentlichen isobare Nachdruckphase (III) bis zum Erreichen einer Isochoren (IV) vorgesehen wird,
**dadurch gekennzeichnet,**
daß die Nachdruckdauer (t_{Niso}) in Abhängigkeit von in mindestens einem Lernzyklus ermittelten Kenndatenfeldern (Fig.5a-5c) gesteuert wird, die die Abhängigkeit eines oder mehrerer gemessener Formteil-Sollparameter von mehreren Prozeßparametern (T_{M}, T_{W}, P_{N}) enthalten.

2. Verfahren zum Steuern eines Spritzgießprozesses zur Herstellung von Formteilen aus thermoplastischen Kunststoffen, der mit einer isochoren Abkühlphase (V) abschließt, wobei zwischen der isochoren Abkühlphase (V) und der Verdichtungsphase (I) eine im wesentlichen isobare Nachdruckphase (III) bis zum Erreichen einer Isochoren (IV) vorgesehen wird,
**dadurch gekennzeichnet**,
daß der Nachdruck (p_{N}) in Abhängigkeit von in mindestens einem Lernzyklus ermittelten Kenndatenfeldern (Fig.5a-5c) gesteuert wird, die die Abhängigkeit eines oder mehrerer gemessener Formteil-Sollparameter von mehreren Prozeßparametern (T_{M}, T_{W}, t_{Niso}) enthalten.

3. Verfahren zum Steuern eines Spritzgießprozesses zur Herstellung von Formteilen aus thermoplastischen Kunststoffen, der mit einer isochoren Abkühlphase (V) abschließt, wobei zwischen der isochoren Abkühlphase (V) und der Verdichtungsphase (I) eine im wesentlichen isobare Nachdruckphase (III) bis zum Erreichen einer Isochoren (IV) vorgesehen wird,
**dadurch gekennzeichnet**,
daß die Nachdruckdauer (t_{Niso}) und der Nachdruck (p_{N}) in Abhängigkeit von in mindestens einem Lernzyklus ermittelten Kenndatenfeldern (Fig.5a-5c) gesteuert wird, die die Abhängigkeit eines oder mehrerer gemessener Formteil-Sollparameter von mehreren Prozeßparametern (T_{M}, T_{W}, t_{NiSo}, p_{N}) enthalten.

4. Verfahren nach einem der Ansprüche 1 bis 3, dadurch gekennzeichnet, daß die Nachdruckphase (III) isobar gesteuert wird.

5. Verfahren nach Anspruch 1 bis 4, dadurch gekennzeichnet, daß in dem Lernzyklus einzelne Prozeßparameter jeweils mindestens zweifach variiert werden und zusammen mit den anschließend gemessenen Formteil-Sollparametern und anderen Prozeßparametern abgespeichert werden, wobei mit einem Rechner (12) die Abhängigkeit der Formteil-Sollparameter von den Prozeßparametern bestimmt wird und als Kenndatenfeld gespeichert wird.

6. Verfahren nach Anspruch 1 bis 5, dadurch gekennzeichnet, daß in den sich dem Lernzyklus anschließenden Produktionszyklen die Formteil-Sollparameter und die Prozeßparameter kontinuierlich oder in regelmäßigen oder unregelmäßigen Abständen erfaßt werden und daß die in dem Lernzyklus erstellten Kenndatenfelder aktualisiert werden.

7. Verfahren nach einem der Ansprüche 1 bis 6, dadurch gekennzeichnet, daß als Prozeßparameter mindestens einer der nachfolgenden Parameter, nämlich der isobare Nachdruck (p_{N}) die Nachdruckdauer (t_{Niso}) die Formmassen-Temperatur (T_{M}) oder eine oder mehrere Werkzeugwandtemperaturen (T_{W}) verwendet werden.

8. Verfahren nach einem der Ansprüche 1 bis 7, dadurch gekennzeichnet, daß als Formteil-Sollparameter z.B. das Formteilgewicht (m), bestimmte Abmessungen des Formteils, physikalische Eigenschaften des Formteils oder Oberflächeneigenschaften des Formteils ausschließlich oder in Kombination verwendet werden.

9. Verfahren nach einem der Ansprüche 1 bis 8, dadurch gekennzeichnet, daß zur Beschreibung der Füll-, Verdichtungs- und Abkühlphase als Prozeßparameter zusätzlich Weg- und Geschwindigkeitsdaten der Einspritzschnecke (3) und/oder eine der an der Einspritzschnecke (3) geleisteten Einspritzarbeit proportionale Größe erfaßt werden.

10. Verfahren nach Anspruch 1 bis 9, dadurch gekennzeichnet, daß als Prozeßparameter die Kraft, die die als Kolben wirkende Einspritzschnecke (3) vorantreibt oder die Verformung eines infolge dieser Kraft verformten Maschinenelementes gemessen wird.

11. Verfahren nach Anspruch 1 bis 10, dadurch gekennzeichnet, daß mit Hilfe eines Verschlusses (9) das Fließen der Formmasse nach Ablauf der isobaren Nachdruckzeit unterbunden wird.

12. Verfahren nach Anspruch 1 bis 10, dadurch gekennzeichnet, daß die isochore Prozeßführung durch ein druckabhängiges Zurückbewegen der Einspritzschnecke (3) gesteuert wird.

13. Verfahren nach Anspruch 12, dadurch gekennzeichnet, daß die Steuerkurve zur Beschreibung der zum jeweiligen Druck gehörigen Lage der Einspritzschnecke (3) in einem Lernzyklus durch die Erfassung der druckabhängigen Lageänderung der Einspritzschnecke (3) bei verschlossener Einspritzdüse ermittelt wird.

14. Verfahren nach Anspruch 1 bis 13, dadurch gekennzeichnet, daß durch Messung der auf die Einspritzschneckenlageänderung bezogenen Druckänderung oder durch Messung der druckbezogenen Einspritzschneckenlageänderung das Fließen der Formmasse in den Formhohlraum (11) überwacht wird.

## Claims

1. Process for controlling an injection molding process for producing molding parts of thermoplastic materials, which process ends with an isochoric cooling phase (V), a substantially isobaric after-pressure phase (III) being provided between the isochoric cooling phase (V) and a compacting phase (I), said after-pressure phase lasting until an isochore (IV) is reached,
**characterized in that**
the after-pressure phase (t_{Niso}) is controlled responsive to parameter fields (Fig. 5a-5c) determined in at least one learning cycle and containing the dependency of one or more measured set molding values on a plurality of process parameters (T_{M}, T_{W}, p_{N}).

2. Process for controlling an injection molding process for producing molding parts of thermoplastic materials, which process ends with an isochoric cooling phase (V), a substantially isobaric after-pressure phase (III) being provided between the isochoric cooling phase (V) and a compacting phase (I), said after-pressure phase lasting until an isochore (IV) is reached,
**characterized in that**
the after-pressure (p_{N}) is controlled responsive to parameter fields (Fig. 5a-5c) determined in at least one learning cycle and containing the dependency of one or more measured set molding values on a plurality of process parameters (T_{M}, T_{W}, t_{Niso}).

3. Process for controlling an injection molding process for producing molding parts of thermoplastic materials, which process ends with an isochoric cooling phase (V), a substantially isobaric after-pressure phase (III) being provided between the isochoric cooling phase (V) and a compacting phase (I), said after-pressure phase lasting until an isochore (IV) is reached,
**characterized in that**
the after-pressure time (t_{Niso}) and the after-pressure (p_{N}) are controlled responsive to parameter fields (Fig. 5a-5c) determined in at least one learning cycle and containing the dependency of one or more measured set molding values on a pluraluty of process parameters (T_{M}, T_{W}, t_{Niso}, p_{N}).

4. Process as set forth in claims 1 to 3, characterized in that the after-pressure phase (III) is controlled isobarically.

5. Process as set forth in claims 1 to 4, characterized in that in the learning cycle, individual process parameters are varied at least twice and are stored together with subsequently measured set molding part parameters and other process parameters, the dependency of the set molding parameters on the process parameters being determined by a computer (12) and stored as a parameter field.

6. Process as set forth in claims 1 to 5, characterized in that in the production cycles following the learning cycle, the set molding parameters and the process parameters are determined continuously or in regular or irregular periods, and that parameter fields established in the learning cycle are actualized.

7. Process as set forth in claims 1 to 6, characterized in that the process parameters used comprise at least one of the following parameters, i.e., the isobaric after-pressure (p_{N}), the after-pressure phase (t_{Niso}), the molding part temperature (T_{M}) or one or more mold wall temperatures (T_{W}).

8. Process as set forth in claims 1 to 7, characterized in that the used set molding part parameters comprise, either exclusively or in combination, e.g., the molding weight (m), specific dimensions of the molding, physical properties of the molding or its surface properties.

9. Process as set forth in claims 1 to 8, characterized in that, for specifying the filling, compacting and cooling phase as process parameters, there are determined additionally distance and speed data of the injection screw (3) and/or a value proportionate to the injection work performed at the injection screw (3).

10. Process as set forth in claims 1 to 9, characterized in that the measured process parameter is the force driving the injection screw (3) acting as a piston, or the deformation of a machine element deformed due to said force.

11. Process as set forth in claims 1 to 10, characterized in that, by means of a closure, the flow of the molding composition is stopped upon expiration of the isobaric after-pressure period.

12. Process as set forth in claims 1 to 10, characterized in that the isochoric process performance is controlled by a pressure-dependent return movement of the injection screw (3).

13. Process as set forth in claim 12, characterized in that the control curve for specifying the position of the injection screw (3) belonging to the corresponding pressure is determined in a learning cycle by establishing the pressure-dependent change of position of the injection screw (3) with a closed injection nozzle.

14. Process as set forth in claims 1 to 13, characterized in that by measuring the pressure change based on the change of position of the injection screw, or by measuring the pressure-based change of position of the injection screw, the flow of the molding composition in the mold cavity (11) is monitored.

## Revendications

1. Procédé pour réguler une opération de moulage par injection, pour la réalisation de pièces moulées en matières thermoplastiques, se terminant par une phase de refroidissement isochore (V), procédé dans lequel entre la phase de refroidissement isochore (V) et la phase de compression (I) est prévue une phase de maintien en pression sensiblement Isobare (III) jusqu'à atteindre un isochore (IV), caracterisé en ce que la durée du maintien en pression (t_{Niso}) est régulée en fonction de champs de données de référence (Figures 5a à 5c), déterminés au cours d'au moins un cycle d'apprentissage, qui contiennent la dépendance d'un ou de plusieurs paramètres de consigne de pièce moulée mesurés en fonction de plusieurs paramètres de procédé (T_{M}, T_{W}, P_{N}).

2. Procédé pour réguler une opération de moulage par injection, pour la réalisation de pièces moulées en matières thermoplastiques, se terminant par une phase de refroidissement isochore (V), procédé dans lequel entre la phase de refroidissement Isochore (V) et la phase de compression (I) est prévue une phase de maintien en pression sensiblement Isobare (III) jusqu'à atteindre un isochore (IV), caractérisé en ce que le maintien en pression (P_{N}) est régulé en fonction de champs de données de référence (Figures 5a à 5c), déterminés au cours d'au moins un cycle d'apprentissage, qui contiennent la dépendance d'un ou de plusieurs paramètres de consigne de pièce moulées mesurés en fonction de plusieurs paramètres de procédé (T_{M}, T_{W}, t_{Niso}).

3. Procédé pour réguler une opération de moulage par injection, pour la réalisation de pièces moulées en matières thermoplastiques, se terminant par une phase de refroidissement isochore (V), procédé dans lequel entre la phase de refroidissement isochore (V) et la phase de compression (I) est prévue une phase de maintien en pression sensiblement isobare (III) jusqu'à atteindre un isochore (IV), caractérisé en ce que la durée du maintien en pression (t_{Niso}) et le maintien en pression (P_{N}) sont régulés en fonction de champs de données de référence (Figures 5a à 5c), déterminés au cours d'au moins un cycle d'apprentissage, qui contiennent la dépendance d'un ou de plusieurs paramètres de consigne de pièce moulée mesurés en fonction de plusieurs paramètres de procédé (T_{M}, T_{W}, t_{Niso}, P_{N}).

4. Procédé suivant l'une des revendications 1 à 3 caractérisé en ce que la phase de maintien en pression (III) est régulée de manière isobare.

5. Procédé suivant l'une des revendications 1 à 4, caractérisé en ce qu'au cours du cycle d'apprentissage, les différents paramètres de procédé sont modifiés, chacun, au moins deux fois et mémorisés ensemble avec les paramètres de consigne de pièce moulée mesurés après, et avec les autres paramètres de procédé, la dépendance des paramètres de consigne de pièce moulée en fonction des paramètres de procédé étant déterminée à l'aide d'un ordinateur (12) et mémorisée sous forme de champ de données de référence.

6. Procédé suivant l'une des revendications 1 à 6, caractérisé en ce qu'au cours des cycles de production suivant le cycle d'apprentissage, les paramètres de consigne de pièce moulée et les paramètres de procédé sont saisis en continu ou à des intervalles réguliers ou irréguliers et que les champs de données de référence établis au cours du cycle d'apprentissage sont mis à jour.

7. Procédé suivant l'une des revendications 1 à 6, caractérisé en ce que comme paramètres de procédé, on utilise au moins l'un des paramètres suivants, à savoir le maintien en pression isobare (P_{N}), la durée du maintien en pression (t_{Niso}), la température de masse de moulage (T_{M}) ou une ou plusieurs températures de paroi d'outil (T_{W}).

8. Procédé suivant l'une des revendications 1 à 7, caractérisé en ce que comme paramètres de consigne de pièce moulée, on utilise exclusivement ou en combinaison, par exemple, le poids de la pièce moulée (m), certaines dimensions de la pièce moulée, des propriétés physiques de la pièce moulée ou des propriétés de surface de la pièce moulée.

9. Procédé suivant l'une des revendications 1 à 8, caractérisé en ce que pour la description de la phase de remplissage, de compression et de refroidissement comme paramètres de procédé, il est saisi, en outre, des données de trajectoire et de vitesse de la vis d'injection (3) et/ou une grandeur proportionnelle au travail d'injection fourni à la vis d'injection (3).

10. Procédé suivant l'une des revendications 1 à 9, caractérisé en ce que comme paramètre de procédé, il est mesuré la force qui entraîne la vis d'injection (3) agissant comme piston ou la déformation d'un élément de machine déformé par suite de cette force.

11. Procédé suivant l'une des revendications 1 à 10, caractérisé en ce que le flux de la masse de moulage est, à la fin du temps de maintien en pression isobare, interrompu à l'aide d'un obturateur (9).

12. Procédé suivant l'une des revendications 1 à 10, caractérisé en ce que la procédure isochore est régulée par un mouvement de recul de la vis d'injection (3) en fonction de la pression.

13. Procédé suivant la revendication 12, caractérisé en ce que la courbe de régulation pour la description de la position de la vis d'injection (3) relative à la pression momentanée est déterminée au cours d'un cycle d'apprentissage en saisissant, à tuyère d'injection obturée, la variation de la position de la vis d'injection (3) en fonction de la pression.

14. Procédé suivant l'une des revendications 1 à 13, caractérisé en ce que le flux de la masse de moulage dans la cavité de moule (11) est contrôlé en mesurant la variation de la pression en fonction de la variation de la position de la vis d'injection ou en mesurant la variation de la position de la vis d'injection en fonction de la pression.
